# DEMANDE DE BREVET EUROPEEN

(11) **EP 0 750 128 A1**
(43) Date de publication de la demande: **27.12.1996**
(21) Numéro de dépôt: 96401372.6
(22) Date de dépôt: 21.06.1996
(51) Int. Cl.: F16D 25/08, F16D 25/12, F15B 15/08

(54) **Vérin de commande d'un embrayage de véhicule automobile muni d'un soufflet d'étanchéité interne**

(30) Priorité: 22.06.1995 FR 9507628
(71) Demandeur: VALEO, 75017 Paris (FR)
(72) Inventeur: Rey, Frédéric, 38150 Roussillon (FR)
(74) Mandataire: Gamonal, Didier

(57) **Abrégé**

L'invention concerne un vérin hydraulique de commande d'un embrayage de véhicule automobile destiné à commander une fourchette d'embrayage par l'intermédiaire d'un élément de traction (12), du type comportant une chambre hydraulique de commande (22) cylindrique annulaire délimitée radialement par un corps externe (14) cylindrique et par un tube interne (16) monté coaxialement dans le corps externe (14), du type dans lequel l'élément de traction (12) est relié, à l'arrière, au piston (24) et, à l'avant, à la fourchette d'embrayage, et est agencé de manière à traverser axialement le tube interne (16) par un perçage (70) central, et du type comportant un soufflet d'étanchéité (64) pour fermer le perçage (70) en entourant l'élément de traction (12), le tube interne (16) est fixe axialement par rapport au corps externe (14), tandis que le soufflet (64) s'étend à l'intérieur du tube interne (16).

## Description

L'invention concerne un vérin hydraulique de commande d'embrayage pour véhicule automobile.

L'invention concerne plus particulièrement un vérin hydraulique de commande d'un embrayage pour véhicule automobile, destiné à commander une fourchette d'embrayage par l'intermédiaire d'un élément de traction, du type comportant une chambre hydraulique de commande cylindrique annulaire délimitée, d'une part, radialement par un corps externe cylindrique et par un tube interne monté coaxialement dans le corps externe et délimitée, d'autre part, axialement par une paroi transversale avant fixe axialement et par un piston mobile annulaire qui, sous l'effet d'une augmentation de la pression dans la chambre de commande due à un apport de fluide par une entrée d'alimentation agencé dans le corps externe, se déplace axialement depuis une position sortie, par exemple d'embrayage, dans laquelle le volume de la chambre de commande est minimal et vers laquelle il est rappelé par la fourchette d'embrayage, jusqu'à une position rentrée, par exemple de débrayage, dans laquelle le volume de la chambre de commande est maximal, du type dans lequel un ressort de précharge sollicite le piston mobile en direction de sa position rentrée, du type dans lequel l'élément de traction est relié, à l'arrière, au piston mobile et, à l'avant, à la fourchette d'embrayage, et est agencé de manière à traverser axialement le tube interne et la paroi transversale avant par un perçage central, et du type comportant un soufflet d'étanchéité pour fermer le perçage de la paroi transversale avant en entourant l'élément de traction.

De tels vérins de commande d'embrayage ont été proposés dans le but de remplacer les commandes mécaniques par câble afin de pouvoir automatiser et piloter l'embrayage du véhicule ou pour diminuer l'effort à fournir par le conducteur pour manoeuvrer l'embrayage.

Les vérins ainsi conçus utilisent comme élément de traction soit un câble soit une biellette articulée à chacune de ses extrémités sur le piston mobile, d'une part, et sur la fourchette d'embrayage d'autre part.

Cela permet notamment de compenser le défaut d'alignement du à la transformation du mouvement rectiligne du piston en mouvement de rotation de l'extrémité libre de la fourchette articulée d'embrayage à laquelle est relié l'élément de traction.

Une telle conception impose de prévoir une étanchéité agencée à l'extrémité avant du vérin afin d'éviter l'accumulation de poussières à l'intérieur du tube de guidage.

Cette étanchéité est généralement réalisée à l'aide d'un soufflet dont une extrémité est fixée sur la paroi transversale avant du vérin et dont la seconde extrémité est fixée sur le câble et se déplace avec celui-ci.

Le soufflet ainsi agencé à l'extérieur du vérin présente l'inconvénient d'être relativement exposé aux agents extérieurs et donc de risquer d'être coupé ou fendu.

L'agencement du soufflet à l'extérieur du vérin présente également l'inconvénient d'augmenter l'encombrement axiale du vérin.

Afin de remédier à ces inconvénients, l'invention propose un vérin hydraulique du type vu précédemment, caractérisé en ce que le tube interne est fixe axialement par rapport au corps externe, en ce que la paroi transversale avant et le tube interne sont réalisés d'une seule pièce rapportée dans le corps externe, en ce que le tube interne comporte une extrémité axiale avant munie de moyens de fixation du vérin sur un élément de structure fixe du véhicule, en ce que le soufflet est fixé par une de ses extrémités sur l'extrémité axiale avant du tube interne et est relié de manière étanche par sa seconde extrémité à l'élément de traction et en ce que le soufflet d'étanchéité s'étend axialement à l'intérieur du tube interne.

Grâce à l'invention, le soufflet est protégé, l'encombrement axial au-delà du tube externe est réduit et les corps externe et interne peuvent avoir une forme globalement tubulaire.

Selon d'autres caractéristiques de l'invention :
- le piston comporte une jupe annulaire dont une extrémité axiale avant porte un segment annulaire d'étanchéité qui coopère avec une surface cylindrique interne du corps externe et avec une surface cylindrique externe du tube interne pour délimiter axialement la chambre de commande et dont une extrémité axiale arrière porte un flasque transversal sur lequel est fixé l'élément de traction ;
- le flasque transversal comporte au moins un ergot qui s'étend radialement vers l'extérieur et coopère avec une gorge axiale agencée dans la paroi cylindrique du corps externe pour immobiliser le piston en rotation autour de son axe ;
- le soufflet d'étanchéité est monté coulissant sur l'élément de traction par une extrémité axiale ;
- le soufflet est monté fixe axialement sur l'élément de traction par une extrémité axiale ;
- le ressort de précharge s'étend axialement à l'intérieur du tube interne ;
- le corps externe est délimité axialement par un fond transversal arrière ;
- le fond transversal arrière est réalisé venu de matière avec le corps externe.

D'autres caractéristiques et avantages de l'invention apparaîtront à la lecture de la description détaillée qui suit pour la compréhension de laquelle on se reportera aux dessins annexés dans lesquels :
- La figure 1 est une vue en coupe axiale d'un vérin hydraulique conforme aux enseignements de l'invention, dont le piston est représenté en position rentrée de débrayage ;
- la figure 2 est une vue similaire à celle de la figure 1 sur laquelle le piston est en position sortie d'embrayage ;
- la figure 3 est une vue en section transversale selon la ligne 3-3 de la figure 1 d'un vérin selon l'invention;
- la figure 4 est une représentation schématique d'un second mode de réalisation de l'invention.

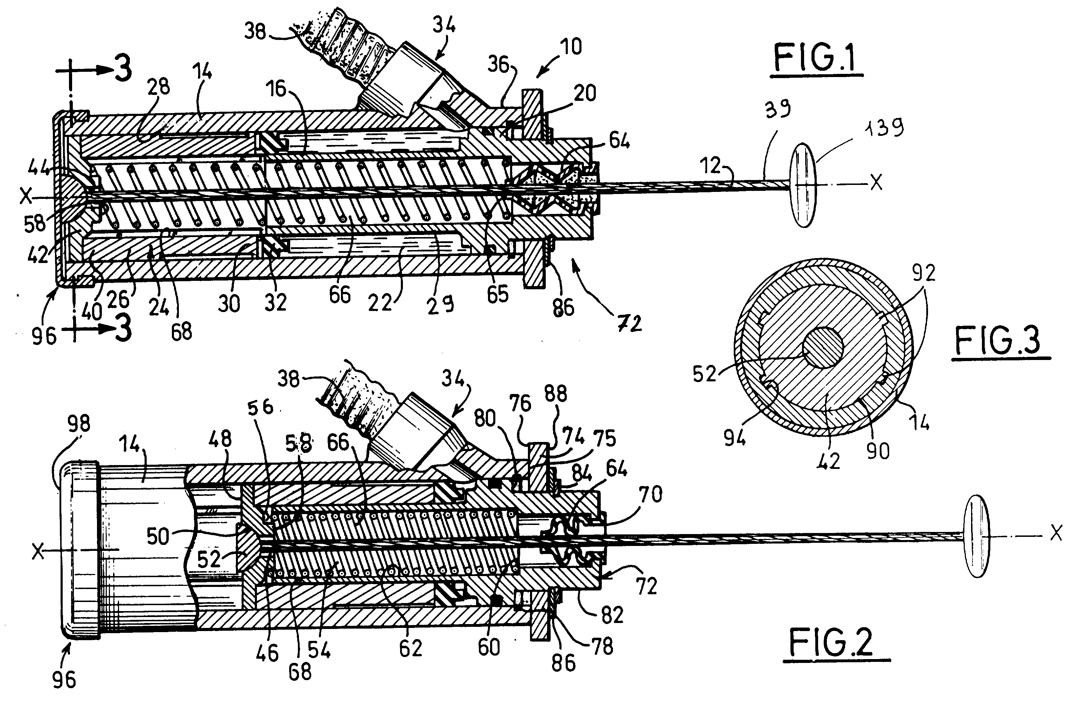

On a représenté sur la figure 1 un vérin hydraulique 10 conforme aux enseignements de l'invention destiné à agir sur une fourchette d'embrayage (non représentée) par l'intermédiaire d'un câble de traction 12.

Le vérin hydraulique 10 comporte un corps externe 14 sensiblement cylindrique et tubulaire d'axe X-X.

Un tube interne 16 est monté coaxialement dans le corps externe 14 et comporte, à une première extrémité axiale avant 72, un collet radial externe 2, ou paroi transversale avant, qui permet, d'une part, le centrage du tube interne 16 à l'intérieur du corps externe 14 et, d'autre part, de délimiter axialement vers l'arrière une chambre hydraulique de commande 22 qui est par ailleurs délimitée radialement entre le tube interne 16 et le corps externe 14.

Suivant une caractéristique, le tube interne 16 est fixe axialement et réalisé d'une seule pièce avec la paroi transversale avant 20. Cette pièce est rapportée, de manière décrite ci-après, dans le corps externe 14.

Un piston cylindrique annulaire 24 comporte une jupe annulaire de guidage 26 qui coopère avec la surface cylindrique interne 28 du corps externe 14, et qui porte à son extrémité axiale avant 30 une coupelle d'étanchéité annulaire 32 qui permet de délimiter axialement la chambre de commande 22.

Le piston annulaire 24 est susceptible de coulisser axialement entre le corps externe 14 et le tube interne 16 de manière à faire varier le volume de la chambre de commande 22.

La coupelle d'étanchéité 32 coopère avec la surface cylindrique interne 28 du corps externe 14 et avec une surface cylindrique externe 29 du tube interne 16 pour délimiter de manière étanche la chambre de commande 22.

Une entrée 34 d'alimentation de la chambre hydraulique 22 est agencée dans la surface externe 36 du corps externe 14 et elle est raccordée par une canalisation souple 38 à un circuit d'alimentation comportant usuellement un émetteur (non représenté) de fluide sous pression.

Le piston mobile 24 est ainsi susceptible d'occuper une position rentrée, représentée sur la figure 1, dans laquelle le volume de la chambre de commande 22 est maximal et une position sortie, représentée à la figure 2, dans laquelle le volume de la chambre 22 est minimal.

Dans la position rentrée, l'embrayage est débrayé, tandis que dans la position de sortie l'embrayage est embrayé.

A l'extrémité axiale arrière 40 de la jupe annulaire 26 du piston 24 est agencé un flasque transversal circulaire 42 qui est percé en son centre d'un orifice 44 pour le passage de l'extrémité arrière 46 du câble de traction 12.

La face axiale arrière 48 du flasque 42 est munie en son centre d'un logement hémisphérique 50 destiné à recevoir une olive hémisphérique 52 complémentaire dans laquelle est sertie l'extrémité 46 du câble de traction 12.

Le câble de traction 12 traverse axialement de part en part le tube interne 16 et il est relié par son extrémité avant 39 à la fourchette d'embrayage via une rondelle 139 coopérant avec l'extrémité concernée de ladite fourchette.

Ainsi, le câble de traction 12 relie la fourchette d'embrayage et le piston mobile 24, qui est simplifié par la présence du flasque 42. Ce piston 24 est donc tubulaire.

De manière connue, un ressort de précharge 54 sollicite le piston 24 vers sa position rentrée de manière à maintenir le câble de traction 12 tendu. La fourchette de débrayage - de manière connue - sous l'action du ressort de précharge sollicite ainsi la butée de débrayage que comporte l'embrayage en appui constant contre les extrémités internes des doigts du diaphragme.

Toutefois, le ressort de précharge 54 fournit une force de rappel inférieure à celle exercée par la fourchette d'embrayage sur le câble 12 de sorte que, en l'absence de pression dans la chambre de commande 22, le piston 24 occupe une position de repos qui est sensiblement sa position avancée (ou de sortie) représentée à la figure 2.

Conformément aux enseignements de l'invention, le tube interne 16 étant fixe axialement, le ressort de précharge 54 est en appui, par une première extrémité arrière 56, contre une face d'extrémité axiale avant 58 du flasque 42 du piston 24 et, par son extrémité avant 57, contre une face d'épaulement axial 60 agencée dans la surface cylindrique interne 62 du tube interne 16.

Cette disposition permet d'éviter de placer le ressort de précharge 54 à l'intérieur de la chambre hydraulique 22 comme cela était réalisé dans l'art antérieur.

Cela permet notamment d'augmenter sensiblement la longueur du ressort de précharge 54 et ainsi de diminuer sa variation relative de longueur entre les deux positions extrêmes du piston 24.

On notera que la face avant 58 du flasque 42 présente centralement un téton de centrage ce qui permet de positionner l'extrémité arrière 56 du ressort 54.

Selon un autre aspect de l'invention, un soufflet d'étanchéité 64 est agencé de manière à éviter la pénétration de poussières à l'intérieur de l'espace 66 délimité radialement par la surface interne 62 du tube 16 et par la surface cylindrique interne de la jupe annulaire 26 du piston 24, et délimité axialement par la face axiale avant 58 du flasque 42.

Le soufflet d'étanchéité 64 est accroché par une première extrémité autour de l'ouverture circulaire - ou perçage central - avant 70 du tube interne 16 par laquelle le câble 12 débouche hors du tube interne 16.

Le soufflet est donc fixé par une de ses extrémités sur l'extrémité axiale avant 72 du tube interne 16.

Suivant une caractéristique, le soufflet 64 s'étend axialement à l'intérieur du tube interne 16 et il est relié de manière étanche par sa seconde extrémité au câble 12.

Dans l'exemple de réalisation représenté sur les figures 1 et 2, le soufflet 64 est monté fixe dans l'ouverture 70 du tube interne 16 et son extrémité axiale interne 65 est montée coulissante de manière étanche sur le câble 12 et présente de ce fait une faible longueur. Le câble 12 est pincé par l'extrémité interne 65 du soufflet 64.

Selon un autre aspect de l'invention, le tube interne 16 possède une extrémité avant 72 en forme de nez qui s'étend axialement vers l'avant au-delà du collet radial 20 et qui permet le centrage et la fixation du vérin 10 sur une bague 74 reliée à une structure fixe (non représentée) du véhicule telle que par exemple le carter de la boîte de vitesses ou un élément de la caisse du véhicule. Le tube interne 16 est muni de moyens de fixation du vérin sur un élément de structure fixe du véhicule.

Plus précisément, le vérin 10 est en appui contre une face axiale arrière 76 de la bague 74 par l'extrémité axiale avant 75 du corps externe 14.

Un premier anneau élastique 78, qui est engagé dans une gorge annulaire de la paroi cylindrique interne 28 du corps externe 14, coopère avec la face axiale avant 80 du collet radial 20 du tube interne 16 pour bloquer celui-ci axialement vers l'avant par rapport au corps externe 14.

Le nez avant 72 du tube 16 dépasse au travers de la bague 74 et comporte sur sa surface cylindrique externe 82 un second anneau élastique 84 qui, par l'intermédiaire d'une rondelle 86 prend appui contre la face axiale avant 88 de la bague 74.

Le tube interne 16 est ainsi bloqué axialement vers l'arrière et donc immobilisé par rapport à la bague 74.

Le corps externe 14 du vérin 10, qui est immobilisé vers l'avant par la bague 74, est immobilisé axialement vers l'arrière par le premier anneau élastique 78 qui est en appui sur le corps interne 16.

Ici les anneaux 78 et 84 sont fendus et consistent en de simples circlips. Grâce à cette disposition, le corps externe 14, le corps interne 16 peuvent être de forme tubulaire tout comme le piston 24.

Selon un autre aspect de l'invention, et comme cela est représenté plus particulièrement à la figure 3, le flasque 42 du piston 24 est muni sur son bord périphérique 90 de quatre ergots 92 qui s'étendent radialement vers l'extérieur et qui sont reçus dans des gorges axiales longitudinales 94 pratiquées dans la surface cylindrique interne 28 du corps externe 14 de manière à empêcher toute rotation du piston 16, et donc du câble 12 et du ressort 54 autour de leur axe commun X-X. Bien entendu cette disposition n'est pas impérative.

Dans le premier exemple de réalisation qui est représenté aux figures 1 à 3, on peut voir que l'extrémité axiale arrière 96 du corps externe 16 est fermée par un fond transversal 98 rapporté par clipsage sur ledit corps 16.

Cette disposition permet de simplifier le corps 16 et de limiter le mouvement de recul du piston lorsque l'embrayage est débrayé (figure 1).

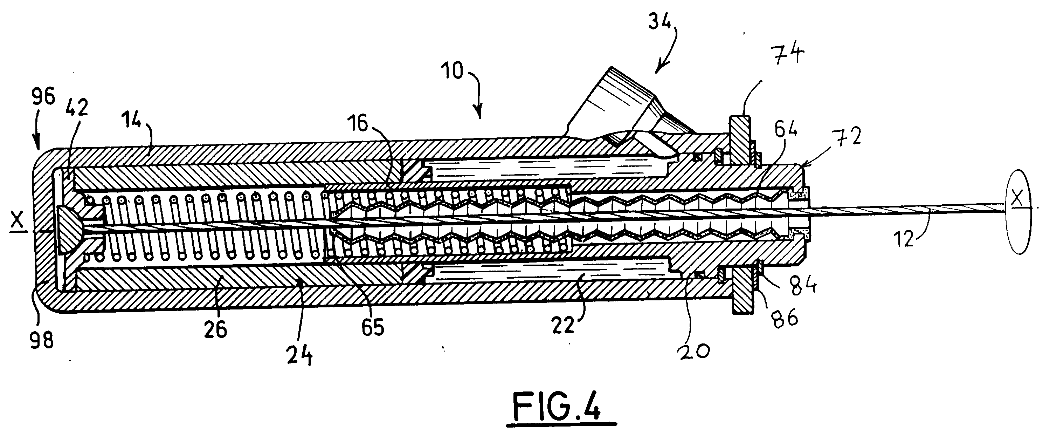

Sur la figure 4, des éléments similaires ou identiques à ceux représentés sur les figures 1 à 3 sont désignés par les mêmes chiffres de référence.

On a représenté sur la figure 4 un second mode de réalisation de l'invention dans lequel le fond transversal 92 est réalisé venu de matière avec le corps extérieur 16.

Dans ce mode de réalisation, l'extrémité axiale interne 65 du soufflet d'étanchéité 64 est montée fixe sur le câble de traction 12 et le soufflet est de ce fait d'une longueur supérieure à celle vue dans le premier mode de réalisation, c'est-à-dire d'une longueur au moins égale à la course axiale du piston.

On notera la présence d'un joint d'étanchéité statique non référencé dans les figures 1,2,4, agissant entre la surface cylindrique interne 28 du corps externe 14 et la surface cylindrique externe du collet 20. Ainsi le vérin 10 ne comporte qu'un joint dynamique à savoir le joint 32.

Ce vérin est d'un faible encombrement axial au-delà de la bague fixe 74.

En outre, le soufflet 64 est protégé puisqu'il s'étend axialement à l'intérieur du tube interne.

La fixation de l'extrémité avant 72 en forme de nez sur la bague 74 peut être réalisée d'une autre manière, par exemple par un cordon de soudage remplaçant l'anneau 84 et la rondelle 86.

On peut réaliser également une liaison par vissage entre le nez 72 et la bague 74.

En variante, il peut s'agir d'un montage baïonnette.

## Revendications

1. Vérin hydraulique de commande d'un embrayage de véhicule automobile destiné à commander une fourchette d'embrayage par l'intermédiaire d'un élément de traction (12), du type comportant une chambre hydraulique de commande (22) cylindrique annulaire délimitée, d'une part, radialement par un corps externe (14) cylindrique et par un tube interne (16) monté coaxialement dans le corps externe (14) et, d'autre part, délimitée axialement par une paroi transversale avant (20) fixe et par un piston mobile (24) annulaire qui, sous l'effet d'une augmentation de la pression dans la chambre de commande (22), due à un apport de fluide par une entrée d'alimentation (34) agencée dans le corps externe (14), se déplace axialement depuis une position sortie, par exemple d'embrayage, dans laquelle le volume de la chambre de commande (22) est minimal et vers laquelle il est rappelé par la fourchette d'embrayage, jusqu'à une position rentrée, par exemple de débrayage, dans laquelle le volume de la chambre de commande (22) est maximal, du type dans lequel un ressort de précharge (54) sollicite le piston (24) en direction de sa position rentrée, du type dans lequel l'élément de traction (12) est relié, à l'arrière, au piston (24) et, à l'avant, à la fourchette d'embrayage, et est agencé de manière à traverser axialement le tube interne (16) et la paroi transversale avant (20) par un perçage (70) central, et du type comportant un soufflet d'étanchéité (64) pour fermer le perçage (70) de la paroi transversale avant (20) en entourant l'élément de traction (12), caractérisé en ce que le tube interne (16) est fixe axialement par rapport au corps externe (14),en ce que la paroi transversale avant (20) et le tube interne (16) sont réalisés d'une seule pièce rapportée dans le corps externe (14), en ce que le tube interne (16) comporte une extrémité axiale avant (72) munie de moyens de fixation du vérin (10) sur un élément de structure (74) fixe du véhicule, en ce que le soufflet (64) est fixé par une de ses extrémités sur l'extrémité axiale avant (72) du tube interne (16) et est relié de manière étanche par sa seconde extrémité à l'élément de traction (12) et en ce que le soufflet d'étanchéité (64) s'étend axialement à l'intérieur du tube interne (16).

2. Vérin hydraulique selon la revendication 1, caractérisé en ce que le piston (24) comporte une jupe annulaire (26) dont une extrémité axiale avant (30) porte une coupelle annulaire d'étanchéité (32) qui coopère avec une surface cylindrique interne (28) du corps externe (14) et avec une surface cylindrique externe (29) du tube interne (16) pour délimiter axialement la chambre de commande (22) et dont une extrémité axiale arrière (40) porte un flasque transversal (42) sur lequel est fixé l'élément de traction (12).

3. Vérin hydraulique selon la revendication 2, caractérisé en ce que le flasque transversal (42) comporte au moins un ergot (92) qui s'étend radialement vers l'extérieur et qui coopère avec une gorge axiale (94) agencée dans la paroi cylindrique interne (28) du corps externe (14) pour immobiliser le piston (24) en rotation autour de son axe (X-X).

4. Vérin selon l'une quelconque des revendications 1 à 4, caractérisé en ce que le soufflet d'étanchéité (64) est monté coulissant sur l'élément de traction (12) par une extrémité axiale (65).

5. Vérin selon l'une quelconque des revendications 1 à 3, caractérisé en ce que le soufflet est monté fixe axialement sur l'élément de traction (12) par une extrémité axiale (65).

6. Vérin hydraulique selon l'une quelconque des revendications précédentes, caractérisé en ce que le ressort de précharge (54) s'étend axialement à l'intérieur du tube interne (16).

7. Vérin hydraulique selon l'une quelconque des revendications précédentes, caractérisé en ce que le corps externe (14) est délimité axialement par un fond transversal arrière (98).

8. Vérin hydraulique selon la revendication 7, caractérisé en ce que le fond transversal arrière (98) est réalisé venu de matière avec le corps externe (14).

9. Vérin hydraulique selon l'une quelconque des revendications précédentes, caractérisé en ce que l'extrémité axiale avant (72) du tube interne (16) est en forme de nez.
